# EUROPEAN PATENT APPLICATION

(11) **EP 4 523 541 A1**
(43) Date of publication of application: **19.03.2025**
(21) Application number: 24200712.8
(22) Date of filing: 17.09.2024
(51) Int. Cl.: A23B 4/06, A23L 13/60

(54) **METHOD FOR INDUSTRIAL PREPARATION OF FROZEN DEEP-FRIED SNACKS**

(30) Priority: 18.09.2023 BE 202305764
(71) Applicant: Beltaste Hamont NV, 3930 Hamont (BE)
(72) Inventor: MUYSHONDT, Leon, 3930 Hamont (BE)
(74) Representative: Brantsandpatents bv

(57) **Abstract**

The current invention relates to a method for the industrial preparation of frozen deep-fried snacks, wherein the method comprises a step of subjecting cooked deep-fried snacks based on a meat paste to a drying process, wherein the drying process includes producing one or more air currents by one or more air knives, and wherein the cooked deep-fried snacks are guided over a roller conveyor through the one or more air currents, wherein the speed of the air current is regulated at 6-30 m/s, at a pressure of 10 to 30 PSI, and wherein the temperature of the air current is between 20 to 30°C, after which the dried deep-fried snacks are frozen by means of an in-line freezer to a temperature of -18 °C or lower.

## Description

### TECHNICAL FIELD

The invention relates to a method for the industrial preparation of frozen deep-fried snacks, comprising a drying process in which air knives are used.

### PRIOR ART

Deep-fried snacks such as hamburgers and frikandellen are very popular. Typically, these are produced from a homogeneous meat paste, shaped through a shaping process, heated by cooking or frying, and then frozen.

A disadvantage of this process is that deep-fried snacks are often still moist after cooking or frying and can stick to each other or to the freezer when freezing, which can damage the snacks. Additionally, the snacks are also very hot and must first be cooled before they can be frozen. To this end, the snacks are air-cooled before freezing, whereby these also partially dry. This is, however, a time-consuming option, while cooling and freezing preferably takes place as soon as possible after baking or cooking, so as not to negatively affect the texture and taste, and to avoid or limit microbial contamination and/or. Optionally, additional air circulation is provided to slightly speed up this process, or the snacks are actively cooled in a cooling chamber. However, actively cooling the snacks in a cooling chamber requires a lot of energy, and is therefore not very sustainable.

The present invention therefore aims to find a solution for at least some of the aforementioned problems.

Existing methods for drying food products, such as, for example, described in JP 2009 213 357, use a drying chamber in which cold air is blown onto the food products while they move over a conveyor belt. However, there is still room for improvement.

The present invention aims for a more advanced method for drying and freezing food products by applying active cooling, which not only minimizes the risk of damage to the snacks but also enables lower energy consumption and/or a shorter production line.

### SUMMARY OF THE INVENTION

To this end, the invention provides a method for the industrial preparation of frozen deep-fried snacks according to claim 1. More specifically, the method comprises a step of subjecting cooked deep-fried snacks based on a meat paste to a drying process, wherein the drying process includes producing one or more air currents by one or more air knives, and wherein the cooked deep-fried snacks are guided over a roller conveyor through the one or more air currents. The speed of the air currents, the pressure, and the temperature are therein regulated. Afterwards, the dried deep-fried snacks are frozen using an in-line freezer.

Therein, the drying process with air knives and the controlled air currents which are produced by these knives mean that the snacks are dried and cooled before freezing, that the snacks are already more dimensionally stable before freezing, thereby preventing damage and/or breakage of the snacks, that less waste is generated, and that the production lines can be shortened, all through a process that has a low energy consumption.

Preferred embodiments of the method are shown in claims 2 to 14.

### DESCRIPTION OF THE FIGURES

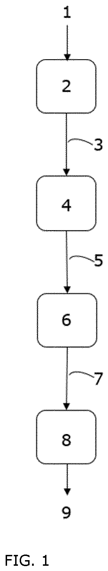

**Figure 1** schematically shows a method for the industrial preparation of frozen deep-fried snacks (9) according to an embodiment of the present invention.

### DETAILED DESCRIPTION

The invention relates to a method for the industrial preparation of frozen deep-fried snacks. The method comprises a step of subjecting cooked deep-fried snacks based on a meat paste to a drying process, wherein the drying process includes producing one or more air currents by one or more air knives, and wherein the cooked deep-fried snacks are guided over a roller conveyor through the one or more air currents. The speed of the air currents, the pressure, and the temperature are therein regulated. Afterwards, the dried deep-fried snacks are frozen by means of an in-line freezer to a temperature of -18°C or lower.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

As used herein, the term "roller conveyor" is synonymous with "conveyor belt."

In a first aspect, the invention relates to a method for the industrial preparation of frozen deep-fried snacks, wherein the method comprises a step of subjecting cooked deep-fried snacks based on a meat paste to a drying process, wherein the drying process includes producing one or more air currents by one or more air knives, and wherein the cooked deep-fried snacks are guided over a roller conveyor through the one or more air currents, wherein the speed of the air current is regulated at 6-30 m/s, at a pressure of 10 to 30 PSI, and wherein the temperature of the air current is between 20 to 30°C, after which the dried deep-fried snacks are frozen by means of an in-line freezer to a temperature of -18 °C or lower.

As used herein, the term "air knife" relates to a device for producing a sheet-like air current by driving air through a slot. Preferably, the slot has a width of at least 0.10 mm to at most 20 mm, more preferably a width of at least 0.50 mm to at most 10.0 mm or a width of at least 0.50 mm and at most 5.0 mm, or a width of at least 0.50 mm and at most 2.0 mm, and most preferably a width of at least approximately 1.0 mm to at most approximately 1.2 mm. This can ensure optimum drying efficiency by regulating the speed of the air current and, if necessary, the pressure.

As used herein, the term "slot" refers to an elongated opening. The dimensions of a slot can be characterized by two characteristic measurements: its length and its width; with the width many times smaller than the length. The length of a slot can be interpreted as the extent of its longest characteristic dimension, as measured along the longitudinal extension of the slot. As used herein, the term "width," when referring to a slot, can be interpreted as the characteristic length of the slot in the direction perpendicular to the direction in which the length of the slot is measured.

An "in-line freezer" is a freezing installation in which food products are placed on a conveyor belt and guided through the freezer. This enables a continuous production and freezing process.

The drying process ensures that the free moisture is efficiently and quickly removed from the cooked deep-fried snacks before they are frozen. This occurs partly by actively blowing away moisture droplets from the snacks, and further by evaporating moisture on the surface of these snacks. This prevents the deep-fried snacks from sticking to each other and to the in-line freezer during freezing. A further advantage of this is that the freezer needs to be cleaned and therefore defrosted less frequently. Furthermore, the drying process has a positive impact on the shape retention of the deep-fried snacks before freezing, resulting in fewer deep-fried snacks with an aberrant shape after freezing compared to a method without a drying process between cooking and freezing. Additionally, actively blowing away droplets is more efficient than known drying systems where air is circulated over the snacks and the moisture simply evaporates.

The drying process also has a cooling function, wherein the cooked deep-fried snacks are cooled by the one or more air currents from the air knives before they are frozen. Preferably, the surface temperature of the cooked deep-fried snacks is between 80 and 88°C, and the core temperature of the cooked deep-fried snacks before the drying process is between 73 and 80°C. The air current reduces the core temperature by at least 10°C, preferably at least 15°C, for example to a core temperature of approximately 70°C, or 65°C, or 60°C. By cooling the snacks using the air current, the temperature is quickly lowered, which promotes the shape retention of the deep-fried snacks and ensures a better quality of the final product.

Known cooling processes make use of natural cooling by placing the snacks in an environment at room temperature and providing additional air circulation if necessary. In addition, the snacks can also be placed in a cooled space, such as a refrigerator or cooling tunnel, which is not energy efficient, however. By using air knives in the current method, the snacks can be cooled efficiently and quickly with low energy consumption, the time between cooking and freezing is also shortened, and the production line can also be shortened.

The use of air knives with an air current at such high speed and low pressure is optimal for creating a stable air current and reducing the free moisture on the deep-fried snacks during the drying process, without damaging the snacks and reducing shape retention. This leads to fewer snacks that do not meet quality requirements, reducing the amount of generated waste. Therefore, the current method results in more efficient use of raw materials and minimizes food waste. In addition, the high speed and low pressure of the air current lead to lower energy consumption, lower noise levels, and lower maintenance costs. A low pressure system also creates a safer working environment.

Preferably, the speed of the air current is regulated to 6 to 30 m/s. Preferably, the pressure on the air current is 10 to 30 PSI. 10 to 30 PSI corresponds to a pressure of approximately 68.9-206.7 kPa or 0.689-2.067 bar (1 PSI « 6.89476 kPa; 1 bar = 100 kPa). Preferably, the temperature of the air current is between 20 and 30°C.

Preferably, the air knives are placed transversely across the roller conveyor, preferably over the full width of the roller conveyor. This ensures that all deep-fried snacks moving over the roller conveyor are guided through the air current. Preferably 2 or 3 air knives are placed next to each other lengthwise to span at least the full width of the roller conveyor. According to a non-limiting example, each air knife is 950 mm long, and/or the width of the roller conveyor is 1800 mm.

According to an embodiment, the one or more air knives are arranged transversely over the roller conveyor, wherein the air flows hit the conveyor belt at an angle of 90°. The advantage of this is that the deep-fried snacks do not move relative to the roller conveyor, they do not touch each other, which could cause breakage, and they reach the in-line freezer in a desired position.

According to an embodiment, the one or more air knives are positioned transversely over the roller conveyor at a 90° angle to the length of the roller conveyor. According to another embodiment, the air knives are at an angle of less than 90° relative to the length of the roller conveyor, such as at an angle of 89°, 88°, 87°, 86°, 85°, 84.5°, 84°, 83.5°, 83°, 82.5°, 82°, 81.5°, 81°, 80.5° or 80°. The inventors found this angle led to an extremely efficient drying process, without the deep-fried snacks changing position relative to the roller conveyor due to the air currents. Ideally, the angle is 83.5°.

According to an embodiment, the air knives are placed transversely across the roller conveyor, both in a plane located above the roller conveyor and below the roller conveyor, preferably at an equal distance from the roller conveyor. Hereby, the deep-fried snacks are guided by the air current coming from two sides, making the drying and cooling process more efficient.

According to a non-limiting example, 12 air knives are provided transversely across the roller conveyor, wherein each time two air knives are placed next to each other lengthwise across the roller conveyor, both in a plane above and below the roller conveyor, wherein this arrangement of four air knives is repeated three times over the length of the roller conveyor.

According to an embodiment of the method, the smallest distance between the one or more air knives and the cooked deep-fried snacks is between 3 and 20 mm. By maintaining the correct low distance between the air knives and the snacks, optimal airflow and drying efficiency are achieved, ensuring a better quality of the final product and allowing for low energy consumption.

According to an embodiment, the deep-fried snacks are guided over the roller conveyor at a speed between 1.5 and 3.5 m/min. By guiding the deep-fried snacks over the roller conveyor at the right speed, a uniform exposure to the air current from the air knives is guaranteed, resulting in a consistent drying process and an improved quality of the snacks.

According to an embodiment, the roller conveyor has a length between 4 and 6 m, preferably 5 m, and at least one or more air knives are positioned halfway along the roller conveyor. In a further embodiment, the air current from the one or more air knives cools the cooked deep-fried snacks. Preferably, the surface temperature of the snacks is between 80 and 88°C, and the core temperature of the cooked deep-fried snacks before the drying process is between 73 and 80°C. The air current reduces the core temperature by at least 10°C, preferably at least 15°C, for example to a core temperature of approximately 70°C, or 65°C, or 60°C. By cooling the snacks using the air current, the temperature is quickly lowered, which promotes the shape retention of the deep-fried snacks and ensures a better quality of the final product.

According to another or further embodiment, one or more air knives are arranged over the roller conveyor, wherein at least two, preferably at least three air currents are produced equidistant from each other, preferably separated in a longitudinal direction of the roller conveyor.

The "longitudinal direction" here is the direction in which the snacks are guided over the roller conveyor through the air currents.

According to another or further embodiment, the in-line freezer is a spiral freezer. A spiral freezer is a type of freezer in which deep-fried snacks are guided in a spiral-shaped path while being exposed to cold air currents. This helps with an even freezing of the product and allows for a higher processing capacity than, for example, a tunnel freezer or plate freezer which do not have a spiral-shaped path. Preferably, the spiral freezer includes a booster pump that supplies refrigerant under pressure and is suitable to operate between -1°C and -40°C. The booster pump ensures that the deep-fried snacks can be frozen quickly and efficiently, which results in a better texture and quality of the final product.

According to an embodiment, the in-line freezer is a CO₂ freezer. CO₂ freezers, which operate based on carbon dioxide (CO₂) as a refrigerant, offer various advantages in food production, including a quick freezing time which results in a rapid cooling of the product, thereby limiting the formation of large ice crystals and preserving the quality, taste, moisture content, nutritional value, and texture of the food. CO₂ freezers are also energy-efficient and environmentally friendly.

According to an embodiment, the freezing of the dried deep-fried snacks takes place at an air temperature between -32°C and -39°C, preferably for at least 30 minutes.

According to another or further embodiment of the method, the deep-fried snacks are frozen in a dimensionally stable manner in the in-line freezer after 8 minutes, preferably after a maximum of 6 minutes, preferably to at least -5°C. Even after such a short time, shape integrity is maintained and a high-quality end product is obtained. As indicated above, the total freezing time is approximately 30 minutes, and the snack remains in the desired position relative to each other and the roller conveyors throughout the drying and freezing steps.

Without the use of the air currents of the air knives and without the use of the in-line freezer, the following method was used, wherein the deep-fried snacks were cooled back down to 30°C after the cooking process, then packed in boxes, and subsequently frozen via a shock-freezing tunnel. This process lasted up to 14 hours.

According to an embodiment, the meat paste is divided into one or more portions by means of a shaping process comprising an extrusion process. According to a non-limiting embodiment, a rod is formed from the meat paste by means of extrusion. For example, the meat paste is pressed through a die plate for this purpose. At regular time intervals, this forming process is interrupted, with the rod being cut through. Preferably, this is done by means of a servo-controlled diaphragm that is alternately opened and closed. In this way, sausages are formed from meat paste, whereby these sausages are essentially the same length.

According to a preferred form of the method, the mass of an individual portion is between 8g and 500g, such as between 25g and 300g, preferably between 50g and 200g. Preferably, the mass of each portion is approximately equal to about 100g or 250g. According to a non-limiting embodiment, each portion is a sausage with a mass of approximately 100g. An advantage of this is that each portion thereby approximately corresponds to the standard consumed amount of the deep-fried snack, by a single person and during a single meal.

According to a further embodiment, the meat paste is heated after the shaping process, wherein the cooked deep-fried snacks are formed. For example, the deep-fried snack is placed in a bath of warm water, the snack is placed in a steam bath, the snack is passed through a steam tunnel, or the snack is placed in heated oil. An advantage of this is that the snack thereby becomes firmer in shape, among other things as a result of protein denaturation. Another advantage of this is that the majority of microorganisms die off as a result of the increased temperature. This contributes to the shelf life of the deep-fried snacks.

Preferably, the heating takes place by cooking the one or more portions in a hot water bath. By heating the deep-fried snacks in a hot water bath, a thorough and even preparation is achieved, whereby the desired texture, taste, and safety of the end product are guaranteed. Preferably, the heating is done in a hot water bath at a temperature of 70-100°C, preferably 80-90°C, such as 81°C, 82°C, 83°C, 84°C, 85°C, 86°C, 87°C, 88°C, 89°C, or 90°C, for 20 to 40 min, preferably for 25 to 35 minutes, such as 30 minutes. Preferably, a core temperature of the cooked deep-fried snacks of between 73°C and 80°C is obtained.

According to an embodiment, the meat paste is a finely ground meat paste with a particle size between 1 and 8mm. This finely ground meat paste is preferably obtained using a method in which the meat is both ground and cut.

According to an embodiment, the meat paste comprises chicken and/or pork. Preferably, the meat comprises both chicken and pork, and more preferably, the pork is pork bacon. According to a non-limiting embodiment, meat from cattle and/or horses is also added. An advantage of using chicken is that it is cheaper and gives structure to the meat paste. It also increases the volume of meat paste. An advantage of using pork is that it contributes to the flavor of the meat paste and the resulting deep-fried snack.

According to an embodiment, one or more additives and/or flavorings are added to the meat paste chosen from the group of salt, bread crumbs, starch, and water.

According to a preferred embodiment of the method, salt is added in the form of a salt solution in water. More preferably, it concerns brine, being a quasi-saturated solution of salt in water. An advantage of this is that the added amount of salt can be dosed better in this case. According to an alternative embodiment, the salt is added in the form of granulated salt.

According to a preferred embodiment of the method, the added mass percentage of salt is at least 0.5% and at most 2.5%. An advantage of the addition of salt, according to the specified concentration, is that it acts as a flavor enhancer without being perceived as disturbing. Salt also helps in stabilizing the proteins in the meat paste, and the binding of this paste.

According to a preferred form of the method, the added mass percentage of breadcrumbs and/or starch is at least 5% and at most 15%. An advantage of adding starch, according to the specified concentration, is that starch contributes to the binding of the meat paste.

According to a preferred embodiment of the method, herbs and spices are added, chosen from the group of black pepper, cumin, coriander, cloves, nutmeg and cayenne pepper. Preferably, allergies are taken into account when selecting these herbs and spices. An advantage of these herbs and spices is that they give the deep-fried snack a distinct and tasty flavor.

According to a preferred form of the method, the herbs and spices are added in the form of powders and/or mixtures of powders. Preferably, the herbs and spices are added in the form of a single powder mixture. An advantage of using (fine) powders is that the flavor of the herbs and spices is optimally transferred to the meat paste, and that the resulting deep-fried snack is homogeneous in taste and texture.

Preferably, between 1 and 2.5% salt, between 5 and 15% bread crumbs and starch, and up to 2% herbs and spices are added.

According to a preferred form of the method, the meat paste is prepared in quantities with an individual mass between 400kg and 800kg. The individual mass is preferably approximately 600kg. An advantage of this is that such an amount of meat paste is compatible with the capacity of standard industrial installations.

### DESCRIPTION OF THE DRAWINGS

### Figure 1: Method for the industrial preparation of frozen deep-fried snacks

Figure 1 schematically shows a method for the industrial preparation of a frozen deep-fried snack (9) according to an embodiment of the current method.

A meat paste (1) based on chicken and pork is prepared, where the paste has a particle size between 1 and 8 mm. The meat paste (1) further comprises water, between 0.5 and 2.5 m% salt, between 5 and 15 m% breadcrumbs and starch together, and a maximum of 2 m% of powdered herbs and spices chosen from black pepper, cumin, coriander, clove, nutmeg, and cayenne pepper.

This meat paste (1) is divided into portions (3) by means of an extrusion process (2), wherein the portions (3) comprise approximately 50g, 100g, or approximately 250g of meat paste, and form rod-shaped sausages.

These portions (3) are then heated (4) by cooking in a bath of warm water between 80 and 90°C for about 30 minutes.

These cooked deep-fried snacks (5) then undergo a drying process (6), for which the cooked snacks (5) are conveyed via a roller conveyor through six air currents produced by two air knives placed next to each other transversely over the roller conveyor, at a speed of the roller conveyor between 1.5 m/min and 3.5 m/min. The roller conveyor has a length of about 5m and a width of about 1.8m. The air knives are placed in three positions along the length of the roller conveyor, wherein the positions are separated from each other over the length of the roller conveyor equidistant from each other. The air knives are positioned transversely over the roller conveyor and the air currents generated through them each time span the entire width of the roller conveyor. The air knives are also placed both above and below the plane of the roller conveyor, allowing the deep-fried snacks to be dried and/or cooled from two directions. The speed of the air currents is between 6 and 30 m/s, at a pressure of 10 to 30 PSI, and a temperature between 20 and 30°C. The knives are positioned above the roller conveyor, and the distance/height between the deep-fried snacks (5) that are guided over the roller conveyor and the knives is between 3 and 20 mm. The angle at which the air currents hit the roller conveyor is 90°, so the deep-fried snacks that are guided over the roller conveyor are not moved by the air currents. The air knives are positioned over the roller conveyor at an angle of 83.5° relative to the length of the roller conveyor. The inventors found that this angle improves the drying process without the deep-fried snacks being moved by the air currents.

In the case of the current sausage-shaped deep-fried snacks, the current process ensures that the snacks remain perfectly straight, making it easy to remove them from the roller conveyor further in the process.

The cooked snacks (5) are dried (6) by the air currents, after which the snacks (7) are visibly dry. Additionally, the core temperature of the cooked snacks (5) decreases by the air currents of the drying process (6) by at least 15°C, until the dried snacks (7) ideally have a core temperature of 73 to 80°C.

Subsequently, the dried deep-fried snacks (7) are frozen (8) in an in-line freezer, more specifically a spiral and CO₂ freezer, to a temperature of less than -18°C, for at least 30 minutes. After 8 minutes in the in-line freezer, the deep-fried snack is already frozen in a dimensionally stable manner to a temperature of approximately -5°C. The combination with the in-line freezer also ensures that the deep-fried snacks that were placed perfectly straight, are frozen in that same position.

The frozen deep-fried snacks (9) are then packaged.

A prior art process, wherein the air knives are not used to dry such snacks, and wherein such an in-line freezer was not used, proved to be much less efficient. Here, the sausage-shaped snacks were cooled back down to a temperature of about 30°C, after which they were packed in boxes and then frozen through a shock-freezing tunnel. This process lasted up to 14 hours.

The present invention should not be construed as being limited to the embodiments described above and certain modifications or changes may be added to the examples described without having to re-evaluate the appended claims.

## Claims

1. Method for the industrial preparation of frozen deep-fried snacks, wherein the method comprises a step of subjecting cooked deep-fried snacks based on a meat paste to a drying process, wherein the drying process includes producing one or more air currents by one or more air knives, and wherein the cooked deep-fried snacks are guided over a roller conveyor through the one or more air currents, wherein the speed of the air current is regulated at 6-30 m/s, at a pressure of 10 to 30 PSI, and wherein the temperature of the air current is between 20 to 30°C, after which the dried deep-fried snacks are frozen by means of an in-line freezer to a temperature of -18 °C or lower.

2. The method according to claim 1, wherein the smallest distance between the one or more air knives and the cooked deep-fried snacks is between 3 and 20 mm.

3. The method according to claim 1 or 2, wherein the deep-fried snacks are guided over the roller conveyor at a speed between 1.5 and 3.5 m/min.

4. The method according to any of the preceding claims, wherein the roller conveyor has a length of 5m, and wherein at least one or more air knives are positioned halfway along the roller conveyor.

5. The method according to claim 4, wherein the one or more air currents from one or more air knives cools the cooked deep-fried snacks, wherein the core temperature of the cooked deep-fried snacks before the drying process is between 73°C and 80°C, and wherein it is reduced by at least 10°C, preferably at least 15°C by the air currents.

6. The method according to any of the preceding claims, wherein one or more air knives are positioned over the roller conveyor, wherein at least two, preferably at least three air currents are produced equidistant from each other.

7. The method according to any of the preceding claims, wherein the in-line freezer is a spiral freezer, which comprises a booster pump that supplies refrigerant under pressure and is suitable to operate between -1°C and -40°C.

8. The method according to any of the preceding claims, wherein the in-line freezer is a CO₂ freezer.

9. The method according to any of the preceding claims, wherein the freezing of the dried deep-fried snacks occurs at an air temperature between -32°C and -39°C for at least 30 min.

10. The method according to any of the preceding claims, wherein the deep-fried snacks are frozen in a dimensionally stable manner in the in-line freezer after a maximum of 8 minutes, preferably to a temperature of -5°C.

11. The method according to any of the preceding claims, wherein the meat paste is divided into one or more portions by means of a shaping process comprising an extrusion process, wherein the meat paste is then heated, forming the cooked deep-fried snacks.

12. The method according to claim 11, wherein during the extrusion process, the meat paste is pressed through a die plate to form one or more portions.

13. The method according to claim 11 or 12, wherein the heating takes place by cooking the one or more portions in a hot water bath at a temperature of 80 to 90°C for 25 to 35 min.

14. The method according to any of the preceding claims, wherein the meat paste is a finely ground meat paste with a particle size between 1 and 8 mm.
